# EUROPÄISCHE PATENTSCHRIFT

(11) **EP 2 255 217 B1**
(45) Veröffentlichungstag und Bekanntmachung des Hinweises auf die Patenterteilung: **15.05.2013**
(21) Anmeldenummer: 09721580.0
(22) Anmeldetag: 20.03.2009
(51) Int. Cl.: G01S 7/497, G01S 7/484

(54) **SENSOR FÜR DIE ÜBERWACHUNG EINES ÜBERWACHUNGSBEREICHS**
SENSOR FOR MONITORING A MONITORING AREA
DÉTECTEUR DESTINÉ À LA SURVEILLANCE D'UNE ZONE DE SURVEILLANCE

(30) Priorität: 20.03.2008 DE 102008015373; 10.07.2008 DE 102008032405
(43) Veröffentlichungstag der Anmeldung: 01.12.2010
(73) Patentinhaber: Cedes AG, 7302 Landquart (CH)
(72) Erfinder: GION-POL, Catregn, 7421 Summaprada (CH); GAY, Thomas, 7208 Malans (CH)
(74) Vertreter: Dobler, Markus
(86) Internationale Anmeldenummer: PCT/EP2009/002082
(87) Internationale Veröffentlichungsnummer: WO 2009/115343

(56) Entgegenhaltungen:
- WO-A-02/42792
- WO-A-97/21261
- DE-U1-202007 009 722
- GB-A- 2 295 740
- US-A- 3 830 567
- US-A- 4 313 655
- US-A- 5 091 627
- US-B1- 6 420 698

## Beschreibung

Die Erfindung betrifft einen Sensor für die Überwachung eines Überwachungsbereichs nach dem Oberbegriff des Anspruchs 1.

### Stand der Technik

Aus der DE 20 2007 009 722 U1 ist eine optoelektronische Vorrichtung mit einer Beleuchtungseinrichtung bekannt, die eine kohärente Lichtquelle und eine Aufweitungseinrichtung zur Aufweitung des von der Lichtquelle ausgesandten Lichts in einer Aufweitungsachse aufweist. Des Weiteren besitzt die Vorrichtung ein Gehäuse mit einer Frontscheibe für den Lichtaustritt. Die Aufweitungseinrichtung ist dafür ausgebildet, das Licht derart auszuweiten und/oder der Lichtquellpunkt der Lichtquelle ist derart zu der Frontscheibe angeordnet, dass im Betrieb das Licht in der Aufweitungsachse über einen großen Teil der Breite der Frontscheibe austritt, um Gefährdungen durch Licht für Personen und deren Augen auszuschließen.

Die GB-A-2 295 740 A beschreibt ein augensicheres Lasersystem, das Sensormittel umfasst wobei zuerst mit einer vergleichsweise kleinen Leistung ohne Gefährdungspotential gesendet wird um festzustellen, ob sich eine Person in einem Abstand befindet, in dem der Strahl eines Hochleistungslasers Augenschäden hervorrufen wird.

Das Thema Augensicherheit tritt immer stärker in den Fordergrund mit der zunehmenden Leistung von Lichtquellen, insbesondere Infrarot-LEDs, die für optoelektronische Sicherheitsvorrichtungen zur Anwendung kommen.

### Aufgabe und Vorteile der Erfindung

Der Erfindung liegt die Aufgabe zu Grunde, einen Sensor für die Überwachung eines Überwachungsbereichs bereitzustellen, der im Hinblick auf Personensicherheit, insbesondere Augensicherheit weiter verbessert ist.

Diese Aufgabe wird durch die Merkmale des Anspruchs 1 gelöst. In den abhängigen Ansprüchen sind vorteilhafte und zweckmäßige Weiterbildungen der Erfindung angegeben.

Die Erfindung geht von einem Sensor für die Überwachung eines Überwachungsbereichs mit einer Sendeeinrichtung aus, die Strahlung, insbesondere elektromagnetische Strahlung mit einer Strahlleistung oder eine sonstige Energiewelle, z.B. Schallwelle aussendet, wobei der Sensor in der Lage ist, Objekte im Überwachungsbereich zu detektieren.

Der Kern der Erfindung liegt nun darin, dass der Sensor Mittel umfasst, mit welchem die auf einem detektierten Objekt aufgebrachte momentane und/oder durchschnittliche Leistung pro Fläche von auf dem Objekt auftreffender Energie oder einer Größe, die darüber Rückschlüsse zulässt, bestimmbar ist und dass Anpassungsmittel vorgesehen sind, um bei der Detektion eines Objekts im Überwachungsbereich die momentane und/oder die durchschnittliche Leistung pro Fläche oder auch eine Größe, die darüber Rückschlüsse zulässt, von auf dem Objekt auftreffender Energie, z.B. elektromagnetischer Strahlung der Sendereinrichtung einen vorgegebenen Wert nicht überschreiten zu lassen, wobei der Sensor dazu ausgebildet ist, zuerst mit einer vergleichsweise kleinen Leistung zu messen, die kein oder kein nennenswertes Gefährdungspotential für Personen kreieren kann, ob sich Objekte in einem vorgegebenem nahen Bereich zur Sendeeinrichtung befinden. Vergleichsweise kleine Leistung kann so verstanden werden, dass in einem vorgegebenen Gefahrenbereich entweder keine oder keine nennenswerte Gefährdung für Personen entstehen kann, weil die Leistung dafür zu klein bzw. die Entfernung der Person zu groß ist.

Vorzugsweise wird die Leistung, falls keine Objekte detektiert werden, insbesondere schrittweise erhöht.

Damit wird es möglich ein Personengefährdungspotenzial für Personen, die von einem Sender der Sendereinrichtung bestrahlt werden, in einem tolerierbaren Bereich zu halten.

Denn der Sensor erkennt quasi selbstständig, wenn er ein Objekt detektiert, dass dadurch ein grundsätzliches Gefährdungspotenzial vorhanden ist, da die Objekte Personen, Tiere oder empfindliche Gegenstände sein können und sorgt dafür, dass dann die Intensität der Strahlung in einem unschädlichen Bereich gehalten wird.

Das kann sich auf jegliche elektromagnetische Strahlung, z.B. Mikrowellenstrahlung oder Röntgenstrahlung beziehen, wobei für die Augensicherheit insbesondere das Lichtspektrum im Vordergrund steht.

Bei der Überwachung der Flächenleistung kann zum Ausschließen von gesundheitsbeeinträchtigender Strahlung bei der Erfassung eines Objekts grundsätzlich die maximal zulässige Flächenleistung auf einen vorgegebenen Wert begrenzt werden. Es ist jedoch auch denkbar, dass das zeitliche Intergral der Flächenleistung also die durchschnittliche Leistung pro Fläche auf einen vorgegebenen Wert beschränkt wird. Denn hohe Strahlungsspitzen sind regelmäßig dann nicht schädlich, wenn deren Leistung nur schnell genug herabgesetzt wird.

Beide Ansätze können alternativ oder in Kombination für eine Leistungsbegrenzung zur Anwendung kommen.

Insbesondere wird im Hinblick auf die Personensicherheit die Norm EN 60825 im Hinblick auf zulässige Intensitäten berücksichtigt. Vorzugsweise sollte eine abgestrahlte Leistung so bemessen sein, dass ein Gefahrenpotential im Hinblick auf die Personensicherheit nicht entsteht, insbesondere bei den zur Sendeeinrichtung möglichen Positionen eines Objekts.

Sobald der Sensor kein Objekt mehr detektiert, kann die Intensität des Sensors erhöht werden.

Damit kann jeglicher Sensor, auch mit vergleichsweise großer Intensität zur Anwendung kommen und es sind keine geometrischen Anpassungen am Gehäuse notwendig, die regelmäßig dazu führen, dass das Gehäuse nicht klein und ästhetisch gehalten werden kann.

In einer weiteren besonders bevorzugten Ausgestaltung der Erfindung umfasst der Sensor einen 3D-Sensor, der auf einem detektierten Objekt aufgebrachte momentane und/oder durchschnittliche Leistung pro Fläche ermittelt. Die Leistung kann auf ein vorgegebenes Niveau anpasst werden. Dabei kann der 3D-Sensor zur Abstandserfassung eingesetzt werden unter Heranziehung der Sendeeinrichtung als Strahlungsquelle für die Distanzmessung, um die Flächenleistung eines anderen Senders zu ermitteln, z.B. aus dem gewonnenen Abstand und einem bekannten Abstrahlkegel des anderen Senders sowie dessen abgegebene Leistung und/oder um eine Überwachung der Sendeeinrichtung für die Distanzmessung im Hinblick auf an einem Objekt ankommende Flächenleistung vornehmen zu können. Die Sendeeinrichtung kann in einer Baueinheit mit dem 3D-Sensor zur Abstandsmessung angeordnet sein. Es ist auch ein separaten Aufbau denkbar. Grundsätzlich können mehrere Sendeeinrichtungen vorgesehen sein, wobei für eine Abstandsmessung nur eine einzige Sendeeinrichtung herangezogen werden kann, welche gegebenenfalls eine Baueinheit mit dem 3D-Sensor bildet. Weist der Sensor mehrere Sendeeinrichtungen auf, kann dieser zur Überwachung einer oder mehrere Sendeeinrichtungen benutzt werden. Dabei können die Sendeeinrichtungen Strahlungen unterschiedlicher physikalischer Natur emittieren. Zum Beispiel kann ein Sensor gemäß der Erfindung, der einen Sender im Infrarotbereich besitzt, eine Schallquelle im Hinblick auf deren an einem Objekt ankommende Flächenleistung überwachen.

Bei der Verwendung von Licht kann erfindungsgemäß eine hohe Sicherheit im Hinblick auf Augen gewährleistet werden.

Im Weiteren ist es bevorzugt, wenn eine Anpassung der durchschnittlichen Leistung pro Fläche über die Zahl der Messungen pro Zeiteinheit mittels der Anpassungsmittel erreichbar ist bzw. grundsätzlich über die Bestrahlungszeit.

Beispielsweise werden bei der Erfassung eines Objekts weniger Messung pro Zeiteinheit bei einer gleich bleibenden Leistung der Sendereinrichtung durchgeführt. Damit wird die durchschnittliche Flächenleistung herabgesetzt und kann somit unter einem gefährlichen Wert gehalten werden. Der Sensor tastet somit den Überwachungsbereich einfach langsamer ab, wobei die grundsätzliche Funktionalität und Leistung unverändert bleiben.

Es ist jedoch auch denkbar, dass über die Anpassungsmittel ein Sender der Sendeeinrichtung, vorzugsweiße alle Sender der Sendeeinrichtung in der Leistung reduzierbar sind. Damit kann z.B. bei unveränderter Tastrate eine Herabsetzung der Intensität auf einem Objekt durch Reduzierung der Sendeleistung erreicht werden. Ebenfalls denkbar ist eine Erhöhung der Empfindlichkeit einer Empfangseinheit des Sensors, so dass mit verminderter Leistung gearbeitet werden kann.

In einer besonders bevorzugten Ausführungsform der Erfindung sind die Anpassungsmittel dazu ausgelegt, wenigstens ein Sender der Sendeeinrichtung, welcher ein detektiertes Objekt bestrahlt in der Leistung zu reduzieren oder ganz abzuschalten. Bei mehreren Sendern der Sendeeinrichtung können Sender, die das Objekt nicht bestrahlen damit unverändert weiter arbeiten und Objekte im verbleibenden Überwachungsbereich erfassen.

Eine weitere Möglichkeit der Einflussnahme auf die Flächenleistung auf einem Objekt kann darin bestehen, dass zumindest ein Sender der Sendeeinrichtung sich mit einstellbaren Blendenmitteln abdecken lässt. Damit kann z. B. der Bereich des Überwachungsbereichs abgeschattet werden, in dem ein Objekt detektiert wird. Dementsprechend kann eine Strahlungsüberdosis in diesem Bereich für das Objekt vermieden werden. Dieser Bereich kann z.B. eine Person, gegebenenfalls der Kopf einer Person oder nur die Augen der Person umfassen .

Im extremsten Fall kann bei einer exakten Feststellung des Objekts eine Überwachung bei unvermindeter Leistung weiterlaufen, wenn z. B. nur die Augen einer Person durch ein variables Lichtventil abgeschattet werden. Beispielsweise kann eine Matrixanzeige für diesen Zweck auf der Basis von LCD-Technologie zur Anwendung kommen.

Die erfindungsgemäße Lehre kann für alle Arten von Sensoren eingesetzt werden, die auf Reflexion basieren. Zum Beispiel Lichttaster oder kamerabasierte Sensoren mit Beleuchtung. Denkbar ist der Einsatz von Time of Flight oder Laufzeitarrays, mit welchen pixelbezogene Abstände einer Szene erfassbar sind, wobei ein Sender mit seinem Licht die Szene ausleuchtet. Es ist auch der Einsatz von Kameras denkbar, die lediglich Bilder aufnehmen, wie z. B. Foto- und Filmkameras. Sofern eine Beleuchtung vorhanden ist, kann die erfindungsgemäße Lehre auch z.B. für Triangulationssensoren und Stereokameras zur Anwendung kommen.

Außerdem können Sensoren zur Anwendung kommen, die nicht auf Reflexion basieren. Beispielsweise ist einem Sender der Sendeeinrichtung ein Empfänger zugeordnet in der Art einer Lichtschranke. Ggf. sind mehrere derartige Lichtschranken vorgesehen.

Um eine Gefährdung von Objekten, insbesondere Personen und Tieren zu vermeiden, wird im Weiteren vorgeschlagen, dass der Sensor dazu ausgestaltet ist, zuerst mit einer vergleichsweise kleinen Leistung, die kein Gefährdungspotenzial kreieren kann, zu messen, ob sich Objekte in einem vorgegebenen nahen Bereich zur Sendeeinrichtung befinden.

Des Weiteren ist es besonders bevorzugt, wenn der Strom eines Senders der Sendeeinrichtung einstellbar ist. Es ist vergleichsweise einfach den Strom durch einen Sender zu regeln. Da Sensoren meistens schon schalten, wenn sich lediglich ein Objekt im Erfassungsbereich befindet, ist es kein Problem, dass entfernte Objekte bei herabgesetzter Sendeleistung nicht mehr erfasst werden. Der Sensor reagiert gleich schnell, lediglich seine Empfindlichkeit ist eingeschränkt. Damit stehen regelmäßig die wichtigsten Funktionen uneingeschränkt zur Verfügung, auch wenn auf z. B. die Weitbereichserfassung in diesem Messzustand verzichtet werden muss.

Eine Einstellung des Stroms kann an einem Sender z. B. über Transistoren, Feldefekttransistoren oder Varistoren erreicht werden, die im Strompfad des Senders angeordnet sind. Diese Elemente sind kostengünstig, leicht anzusteuern und können den Strom kontinuierlich einstellen oder sogar ganz abschalten.

Die Erfindung lässt sich auf alle Bereiche von optischen Sensoren anwenden, inklusive im Tür- und Tor- sowie Sicherheitsbereichs. Auch für "Spiele" z. B. Gamekonsolen, in medizinischen Applikationen, Rauchsensoren und an Robotern kann die erfindungsgemäße Vorgehensweise eingesetzt werden. Des Weiteren liegt ein Anwendungsfeld bei Maschinen, Handys und Irisscannern, um nur eine Auswahl von Möglichkeiten zu nennen. Denkbar ist auch eine Anwendung bei Geräten zur Sichtverbesserung bei Fahrzeugen, z.B. bei Nachtsichtgeräten oder bei Einrichtungen zur Überwachung des Innenraums von Fahrzeugen.

Wie bereits ausgeführt ist die Erfindung nicht auf das Spektrum von Licht im Hinblick auf die Sendeeinrichtung begrenzt, sondern kann sich auf jede Art elektromagnetischer Strahlung, die die Sendeeinrichtung abgibt erstrecken.

In einer überdies bevorzugten Ausgestaltung der Erfindung ist der Sensor in der Lage, Personen von anderen Objekten zu unterscheiden. In diesem Fall wird der Flächenleistungsbegrenzungsvorgang nur bei der Detektion von Personen in Gang gesetzt, wobei bei anderen Objekten der Sensor mit der normalen Leistung weiterarbeitet. Neben Personen, kann eine Differenzierung auch im Hinblick auf Tiere vorgenommen werden. Denkbar ist auch eine Flächenleistungsbegrenzung insbesondere nur im Hinblick auf Bereiche abzustimmen, die Rückschlüsse auf eine Flächenleistung an einem Auge zulassen und/oder vorzugsweise nur die Flächenleistung in Bezug auf ein Auge zu kontrollieren. Das hat den Hintergrund, dass Augen regelmäßig die sensibelsten Bereiche für zu große Lichtleistung auch im Infrarotbereich darstellen.

Im Weiteren ist es bevorzugt, wenn ein Ausgang vorgesehen ist, der signalisiert, dass der Sensor mit eingeschränkter Leistung betrieben wird. Er kann ein Warnsignal ausgegeben werden, wie z. B. ein akustisches Signal, ein Text oder Lichtsignal, dass die gefährdete Person veranlasst, sich vom Sensor wegzubewegen. Das akustische oder optische Signal kann z.B. so unangenehm sein, dass man sich automatisch vom Sensor entfernt oder eine Person die Blickrichtung in eine andere, ungefährliche Richtung lenkt. Auch denkbar ist ein Warnsignal als elektrisches Signal, z.B. an eine übergeordnete Steuerung.

Da infrarotes Licht für Menschen nicht sichtbar ist, tritt kein Augenreflex auf. Erfindungsgemäß kann mit sichtbarem Licht ein Warnsignal abgegeben werden, das so hell ist, dass es den gewünschten Augenreflex hervorruft.

Während einer Messung kann eine Lichtquelle für sichtbares Licht eingeschaltet sein. Die Intensität des sichtbaren Lichts ist vorzugsweise so gewählt, dass ein Augenreflex auftritt. Die Gesamtintensität vom sichtbaren und nicht sichtbaren Licht sollte aber eine kritische Grenze nicht überschreiten. Dies kann z.B. erreicht werden, indem die Intensität des sichtbaren und des nicht sichtbaren Lichts derart über die Zeit gesteuert wird, dass die Gesamtintensität konstant bleibt. Zum Beispiel werden beide sinusförmig moduliert, mit einer Phasenverschiebung von 180 Grad. Auch können beide Quellen im Zeitmultiplex betrieben werden.

Eine solche Art, die Intensität zu steuern, ist grundsätzlich möglich, ohne dass eine Regelung stattfindet bzw. die Distanz zu Objekten von dem Sensor bestimmt wird.

### Ausführungsbeispiel

Ein Ausführungsbeispiel der Erfindung wird anhand der beigefügten Fig. nachfolgend näher erläutert.

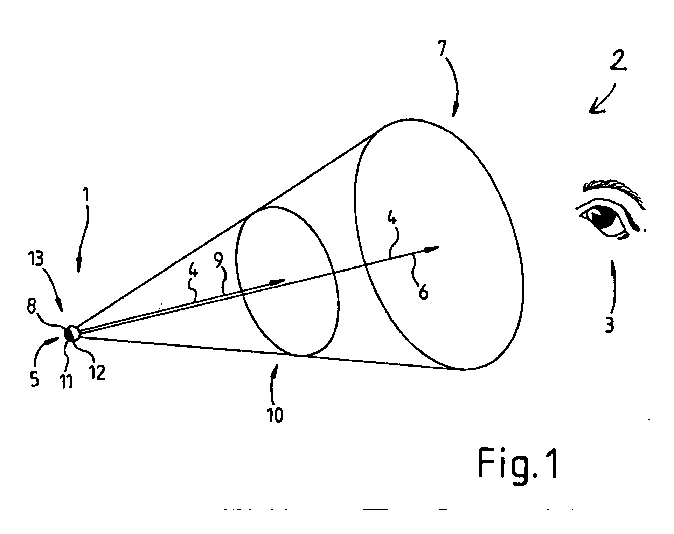

Fig. 1 zeigt einen Sensor 1 mittels dem ein Überwachungsbereich 2 daraufhin überwacht werden soll, ob sich darin ein Objekt 3 befindet. Der Sensor 1 ist hierfür mit einer zur Aussendung einer Strahlung 4, insbesondere einer elektromagnetischen Strahlung und/oder auch einer akustischen Strahlung geeigneten Sendeeinrichtung 5 versehen.

Um eine sichere Erfassung von Objekten in dem zu überwachenden Überwachungsbereich 2 gewährleisten zu können, kann die Sendeleistung der Sendeeinrichtung 5 während Zeiten, in denen kein Objekt im Überwachungsbereich detektiert wird, mit einer vergleichsweise hohen Strahlungsleistung betrieben werden. Beispielsweise um sicher stellen zu können, dass auch in ggf. abgedeckten und/oder schlecht einsehbaren Überwachungsbereichen eine zuverlässige Objekterkennung gewährleistet werden kann.

Beispielhaft und symbolisch ist diese Strahlungsleistung durch den von der Sendeeinrichtung 5 ausgehenden Vektorpfeil 6 dargestellt. Die hierbei auf das Objekt 3, z.B. ein Auge auftreffende Energie von z.B. Licht im Infrarotbereich entspricht beispielsweise der Länge des Vektorpfeils 6. Zur plastischeren Darstellung der bei dieser Sendeleistung auf dem Objekt 3 auftreffenden Energie wird ein um die Pfeilspitze gezogener Kreis 7 herangezogen, der entsprechend einer perspektivischen Ansicht als Elypse dargestellt ist, und dessen Fläche sinngemäß diese Menge an Energie wiederspiegelt.

Um sicher zu stellen, dass ein detektiertes Objekt 3 nicht längerfristig mit zu hoher Energie bestrahlt wird, umfasst der Sensor 1 einen zur Erfassung der auf das detektierte Objekt aufgebrachten Strahlungsenergie geeigneten 3D-Sensor 8. In besonders bevorzugter Weise kann dieser 3D-Sensor auf der Basis des detektierten Ergebnisses und eines vorgegebenen Wertes für eine maximal zulässige Bestrahlung eines Objektes eine Anpassung der Sendeleistung, insbesondere deren Reduzierung veranlassen.

Eine entsprechend maximal zulässige und/oder derart reduzierte Sendeleistung der von der Sendeeinrichtung 5 abgegebenen Strahlung 4 ist wiederum beispielhaft und symbolisch durch den Vektorpfeil 9 bzw. zur plastischeren Veranschaulichung als Fläche des Kreises 10 dargestellt. Die reduzierte Sendeleistung ist z.B. für ein menschliches Auge nicht schädlich, auch wenn es unmittelbar bestrahlt wird.

Um die Sendeleistung der Sendeeinrichtung 5 anpassen zu können, können Anpassungsmittel 11 vorgesehen sein, die hier beispielhaft und symbolisch durch einen ausgefüllten Halbkreis 12 dargestellt sind und z.B. in der Form einer Blende 12 realisiert werden können.

Die Anpassungsmittel können auch derart ausgebildet werden, dass eine Erkennung von Person und Tieren wie z.B. Hunde und Katzen möglich ist. Vorteilhafterweise wird die Sendeleistung dann nicht bei der Erkennung von jedem Objekt herab gesetzt, sondern nur dann, wenn eine Person oder ein Tier erfasst ist.

In bevorzugter Weise kann ein Sender der Sendeeinrichtung 5 zusammen mit einem Empfänger 13 eine Lichtschrankenanordnung ausbilden, die insbesondere bevorzugt zu Erfassung der auf dem detektierten Objekt auftreffenden Energie dienen kann.

### Bezugszeichenliste:

| | |
|---|---|
| 1 | Sensor |
| 2 | Überwachungsbereich |
| 3 | Objekt |
| 4 | Strahlung |
| 5 | Sendeeinrichtung |
| 6 | Vektorpfeil |
| 7 | Kreis |
| 8 | 3D-Sensor |
| 9 | Vektorpfeil |
| 10 | Kreis |
| 11 | Anpassungsmittel |
| 12 | Blende |
| 13 | Empfänger |

## Patentansprüche

1. Sensor (1) für die Überwachung eines Überwachungsbereichs (2) mit einer Sendeeinrichtung (5),
die eine Strahlung (4), insbesondere elektromagnetische Strahlung, mit einer Strahlleistung oder eine sonstige Welle, z. B. Schallwelle, aussendet,
wobei der Sensor in der Lage ist,
Objekte (3) im Überwachungsbereich zu detektieren,
**dadurch gekennzeichnet,**
**dass** der Sensor einen 3D-Sensor zur Abstandserfassung umfasst und dazu ausgebildet ist, aus einem gewonnenen Abstand und einem bekannten Abstrahlkegel die auf einem detektierten Objekt aufgebrachte momentane und/oder durchschnittliche Leistung pro Fläche von auf dem Objekt auftreffender Energie, z. B. elektromagnetische Strahlung der Sendeeinrichtung, zu bestimmen, und
**dass** Anpassungsmittel vorgesehen sind,
um bei der Detektion eines Objekts (3) im Überwachungsbereich die momentane und/oder durchschnittliche Leistung pro Fläche von auf dem Objekt auftreffender Energie einen vorgegebenen Wert nicht überschreiten zu lassen,
wobei der Sensor dazu ausgebildet ist,
zuerst mit einer vergleichsweise kleinen Leistung zu messen, die kein oder keine nennenswertes Gefährdungspotential für Personen kreieren kann,
ob sich Objekte in einem vorgegebenem nahen Bereich zur Sendeeinrichtung befinden.

2. Sensor nach Anspruch 1, **dadurch gekennzeichnet, dass** der Sensor (1) die Sendeeinrichtung (5) für eine Distanzbestimmung zu einem Objekt nutzt.

3. Sensor nach einem der vorhergehenden Ansprüche, **dadurch gekennzeichnet, dass** der Sensor (1) eine weitere Sendeeinrichtung für eine Distanzbestimmung zu einem Objekt nutzt.

4. Sensor nach einem der vorhergehenden Ansprüche, **dadurch gekennzeichnet, dass** eine Anpassung der durchschnittlichen Leistung pro Fläche über die Zahl der Messungen pro Zeiteinheit und/oder über die Messdauer mit abstrahlender Sendeeinrichtung erreichbar ist.

5. Sensor nach einem der vorhergehenden Ansprüche, **dadurch gekennzeichnet, dass** über die Anpassungsmittel (11) ein Sender der Sendeeinrichtung in der Leistung reduzierbar und/oder die Empfindlichkeit einer Empfangseinheit des Sensors erhöhbar ist.

6. Sensor nach einem der vorhergehenden Ansprüche, **dadurch gekennzeichnet, dass** einstellbare Blendenmittel (12) vorgesehen sind, mit welchen ein Sender der Sendeeinrichtung sich abdecken lässt.

7. Sensor nach einem der vorhergehenden Ansprüche, **dadurch gekennzeichnet, dass** ein Sender der Sendeeinrichtung mit einem Empfänger (13) eine Anordnung in der Art einer Lichtschranke ausbildet.

8. Sensor nach einem der vorhergehenden Ansprüche, **dadurch gekennzeichnet, dass** der Strom eines Senders der Sendeeinrichtung einstellbar ist.

9. Sensor nach einem der vorhergehenden Ansprüche, **dadurch gekennzeichnet, dass** der Sensor dazu ausgebildet ist, Personen von anderen Objekten unterscheiden zu können.

## Claims

1. A sensor (1) for monitoring a monitoring area (2) having a transmission device (5) emitting a radiation (4), in particular an electromagnetic radiation at a radiation power or other wave, such as a sound wave,
wherein the sensor is able to detect objects (3) within the monitoring area,
**characterized in that**
the sensor comprises a 3D sensor for the detection of a distance, and is embodied to determine the current and/or mean power per surface of energy impinging upon the object, e.g. electromagnetic radiation of the transmission device at an obtained distance and a known emitting conus, and
adjustment means are provided in order to ensure that the current and/or mean power per surface of energy impinging upon the object does not exceed a predetermined value upon the detection of an object (3) within the monitoring area,
wherein the sensor is embodied such to initially measure, using a comparatively small power that is not able to create any potential hazard, or any significant potential hazard for people, whether any objects are located In a predetermined adjacent area of the transmission device.

2. The sensor according to claim 1, **characterized in that** the sensor (1) utilizes the transmission device (5) for determining the distance to an object.

3. The sensor according to one of the previous claims, **characterized in that** the sensor (1) utilizes an additional transmission device for determining a distance to an object.

4. The sensor according to one of the previous claims, **characterized in that** an adjustment of the mean power per surface across the number of measurements per time unit, and/or across the measurement duration may be obtained with a radiating transmission device.

5. The sensor according to one of the previous claims, **characterized in that** the power of a transmitter of the transmission device may be reduced, and/or the sensitivity of a receiver of the sensor may be heeded via the adjustment means (11).

6. The sensor according to one of the previous claims, **characterized in that** adjustable baffle means (12) are provided, by means of which a transmitter of the transmission device may be covered.

7. The sensor according to one of the previous claims, **characterized in that** a transmitter of the transmission device, together with a receiver (13), forms an arrangement in the manner of a sensor barrier.

8. The sensor according to one of the previous claims, **characterized in that** the current of the transmitter of the transmission device is adjustable.

9. The sensor according to one of the previous claims, **characterized in that** the sensor is embodied to be able to distinguish persons from other objects.

## Revendications

1. Capteur (1) pour la surveillance d'une zone de surveillance (2) avec un dispositif émetteur (5),
qui émet un rayonnement (4), plus particulièrement un rayonnement électromagnétique, avec une puissance de rayonnement ou une autre onde, par exemple une onde sonore,
le capteur étant en mesure,
de détecter des objets (3) dans la zone de surveillance,
**caractérisé en ce que**
le capteur comprend un capteur 3D pour la mesure de distance et est conçu pour déterminer, à partir d'une distance détectée et d'un cône de rayonnement connu, la puissance instantanée et/ou moyenne appliquée à un objet détecté, par unité de surface, de l'énergie arrivant sur l'objet, par exemple le rayonnement électromagnétique du dispositif émetteur et,
**en ce que** des moyens d'adaptation sont prévus,
de façon à ce que, lors de la détection d'un objet (3) dans la zone de surveillance, la puissance instantanée et/ou moyenne par unité de surface de l'énergie arrivant sur l'objet, une valeur prédéterminée ne soit pas dépassée,
le capteur étant conçu,
pour déterminer d'abord avec une puissance relativement petite, qui ne peut constituer aucun risque potentiel ou risque potentiel significatif pour les personnes,
si des objets se trouvent dans une zone prédéterminée proche du dispositif émetteur.

2. Capteur selon la revendication 1, **caractérisé en ce que** le capteur (1) utilise le dispositif émetteur (5) pour une détermination de distance par rapport à un objet.

3. Capteur selon l'une des revendications précédentes, **caractérisé en ce que** le capteur (1) utilise un autre dispositif émetteur pour une détermination de distance par rapport à un objet.

4. Capteur selon l'une des revendications précédentes, **caractérisé en ce qu'**une adaptation de la puissance moyenne par unité de surface peut être obtenue grâce au nombre de mesures par unité de temps et/ou grâce à la durée de mesure avec le dispositif émetteur rayonnant.

5. Capteur selon l'une des revendications précédentes, **caractérisé en ce que**, grâce aux moyens d'adaptation (11), la puissance d'un émetteur du dispositif émetteur peut être réduite et/ou la sensibilité d'une unité de réception du capteur peut être augmentée.

6. Capteur selon l'une des revendications précédentes, **caractérisé en ce que** des moyens à diaphragmes réglables (12) sont prévus, grâce auxquels un émetteur du dispositif émetteur peut être recouvert.

7. Capteur selon l'une des revendications précédentes, **caractérisé en ce qu'**un émetteur du dispositif émetteur constitue, avec un récepteur (13), un dispositif de type barrière lumineuse.

8. Capteur selon l'une des revendications précédentes, **caractérisé en ce que** le courant d'un émetteur du dispositif émetteur est réglable.

9. Capteur selon l'une des revendications précédentes, **caractérisé en ce que** le capteur est conçu pour différencier les personnes des autres objets.
